## Europäisches Patentamt
## European Patent Office
## Office européen des brevets

(19)

(11) Numéro de publication: **0 036 356 B1**

(12)

# FASCICULE DE BREVET EUROPEEN

(45) Date de publication du fascicule du brevet:
15.02.84

(51) Int. Cl.³: **E 04 C 2/30**, F 02 K 1/82 // B21D47/00

(21) Numéro de dépôt: 81400341.4

(22) Date de dépôt: 06.03.81

(54) Elément métallique allégé étanche de construction mécanique.

(30) Priorité: 17.03.80 FR 8005862

(43) Date de publication de la demande:
23.09.81 Bulletin 81/38

(45) Mention de la délivrance du brevet:
15.02.84 Bulletin 84/7

(84) Etats contractants désignés:
DE FR GB

(56) Documents cités:
FR - A - 531 498
FR - A - 1 325 892
FR - A - 1 498 452
FR - A - 2 038 152
FR - A - 2 162 317
FR - A - 2 318 313
GB - A - 1 545 783

(73) Titulaire: SOCIETE NATIONALE D'ETUDE ET DE CONSTRUCTION DE MOTEURS D'AVIATION, "S.N.E.C.M.A.", 2 Boulevard Victor, F-75015 Paris (FR)

(72) Inventeur: Boudigues, Serge, 38, Avenue Franklin Roosevelt, F-92330 Sceaux (FR)

(74) Mandataire: Moinat, François et al, S.N.E.C.M.A. Service des Brevets Boîte Postale 81, F-91003 Evry Cedex (FR)

## Elément métallique allégé étanche de construction mécanique

L'invention est relative à un élément allégé étanche de construction mécanique en tôle métallique qui peut être substitué avantageusement à un élément en matériau métallique composite du genre connu dit «sandwich» lorsqu'il faut non seulement concilier la rigidité et la légèreté mais aussi respecter une limite supérieure d'épaisseur. L'élément de construction de l'invention convient par exemple tout particulièrement à la réalisation d'enveloppes de canaux de postcombustion de turboréacteurs et plus généralement à toute construction dans laquelle le flambage local d'une tôle contraint à utiliser une paroi relativement plus épaisse que ne le commanderaient les efforts généraux dans ladite construction.

D'une façon générale, un élément métallique de construction du genre sandwich comporte, entre deux feuilles ou peaux en tôle mince ou en clinquant une âme (ou coeur) épaisse de structure très légère fixée rigidement par soudage, soudage par diffusion, brasage, collage, etc... à ces peaux pour les entretoiser. Cette constitution doit conférer en principe au sandwich une rigidité élevée en flexion et en torsion tout en limitant sa masse surfacique (masse par unité de surface).

En particulier, il est déjà connu, par le FR-A-2 162 317, d'utiliser une tôle métallique étanche allégée, dans la majeure partie de la surface de laquelle est ménagée une pluralité de trous d'allègement qui débouchent dans une seule face dudit élément et qui forment des rangées de telle sorte que l'épaisseur de métal qui sépare deux trous adjacents est sensiblement inférieure au côté de l'un d'entre eux, les profondeurs des trous étant telles que l'épaisseur minimale de métal qui sépare le fond de chaque trou de la face opposée est au plus égale au côté de ce trou.

Un inconvénient important est que, en raison de la faible épaisseur des peaux, la fixation d'éléments massifs (brides, bossages) à ces peaux par brasage, soudage ou collage impose l'adjonction de pièces de renfort (nervures, éclisses) qui compliquent la construction et accroissent les masses.

Un autre inconvénient est que la conductivité thermique d'une peau à l'autre est faible. Si l'une des peaux est plus exposée que l'autre à la chaleur, des contraintes mécaniques dues aux différences de dilatation apparaissent (cisaillement aux points de fixation du coeur aux peaux, flambage pour la peau la plus chaude), ainsi que des risques de déformation. On est donc là encore conduit à surdimensionner l'élément pour des motifs de sécurité.

L'invention tire parti des progrès réalisés ces dernières années dans l'usinage des matériaux métalliques et notamment dans le perçage et l'alésage. On peut maintenant effectuer des perçages très précis en grand nombre dans des conditions de rapidité donc de coûts satisfaisants, notamment par faisceaux d'électron, faisceaux laser, asservis par exemple à une commande numérique, etc... Bien entendu, d'autres procédés plus classiques, perçage par machines à têtes à forets ou à fraises multiples par exemple peuvent aussi être employés sans sortir du cadre de l'invention. L'objet essentiel de l'invention est de fournir un élément de construction mécanique allégé qui ne présente pas les inconvénients précités mais qui possède cependant une épaisseur et une rigidité en flexion et en torsion sensiblement plus élevées que l'épaisseur et que la rigidité d'une tôle pleine de même masse et par conséquent une bien meilleure résistance à la flexion, à la torsion et au flambage.

L'élément étanche allégé de construction mécanique de l'invention, constitué par une tôle métallique dans la majeure partie de la surface de laquelle est ménagée une pluralité de trous d'allègement qui débouchent dans une seule face dudit élément et qui forment des rangées de trous, est caractérisé en ce que ces trous d'allègement sont des trous cylindriques qui sont disposés dans chaque rangée de telle sorte que l'épaisseur minimale de métal qui sépare deux trous adjacents est sensiblement inférieure au diamètre d'au moins l'un d'entre eux et dont les profondeurs sont telles que l'épaisseur minimale de métal qui sépare le fond de chaque trou de la face opposée est au plus égale au diamètre de ce trou. Cet element étanche est aussi caractérisé en ce qu'il comporte au moins une zone de réserve qui est destinée à la fixation d'un autre élément de construction et qui ne comporte pas de trous d'allégement, une zone dite de transition étant prévue, adjacente à la zone de réserve, et comportant des trous d'allègement de diamètres décroissants vers la zone de réserve.

Un tel élément équivaut géométriquement à un «demi-sandwich» dont le coeur est constitué par l'épaisseur de métal traversée par les trous et dont la peau est constituée par l'épaisseur de métal qui sépare le fond des trous de la face non perforée. Il est en fait réalisable sous deux formes. Si la tôle est épaisse vis à vis du diamètre des trous (par exemple de l'ordre de 3 à 10 fois ce diamètre), on peut y percer des trous borgnes (éventuellement réalisés par un procédé connu pour obtenir des profondeurs précises, des parois lisses et des fonds de trous pratiquement plans et parallèles à la surface opposée de l'élément qui ne comporte pas de perforations). Le «demi-sandwich» obtenu est alors monolithique. Sinon, on peut constituer l'élément par la juxtaposition d'une première tôle (dite «coeur») que les trous traversent de part en part et d'une deuxième tôle dite «peau» sensiblement plus mince que la première et qui est fixée sur l'une des faces de celle-ci par soudage, brasage ou collage, etc... de telle sorte que les trous deviennent borgnes.

Quelle que soit la forme de réalisation adoptée, on peut également fixer par soudage, collage ou brasage. etc... sur la face par laquelle débouchent les trous borgnes une peau supplémentaire également sensiblement plus mince que le coeur. Cette dernière peau peut notamment, mais non obligatoirement, avoir la même épaisseur que la peau fixée sur l'autre face (ou que l'épaisseur résiduelle au fond du trou borgne). La rigidité de l'élément est ainsi accrue et ses deux faces sont lisses.

La tôle du coeur peut être s'il y a lieu déjà conformée (par exemple roulée) avant perçage et fixation de la ou des peaux.

On voit immédiatement, d'après les descriptions générales qui précèdent, que l'élément de construction concerné par l'invention bénéficie des avantages suivants, qu'il soit de structure monolithique ou qu'il soit constitué par l'assemblage d'une tôle de coeur perforée et d'une ou deux tôles de peau:

— le mode de réalisation n'impose pratiquement pas de limite inférieure aux épaisseurs,

— l'épaisseur de tôle traversée par les trous participe non seulement à la rigidité de l'élément de construction, mais aussi à sa résistance mécanique en traction,

— la chaleur diffuse bien dans l'épaisseur de l'élément, de sorte que si une face est soumise à une température élevée, l'autre face étant soumise à une température plus froide, les contraintes thermiques sont beaucoup moins élevées que dans les sandwichs de l'art antérieur,

— enfin, et conformement à l'invention, pour fixer des pièces massives sur l'élément, il suffit de prévoir des réserves de perçage (c'est-à-dire des zones exemptes de trous) aux endroits de l'élément de construction qui doivent recevoir ces pièces; afin d'éviter les discontinuités de répartition des contraintes, on peut prévoir, entre les zones non perforées et les zones perforées, des zones de transition perforées dans lesquelles les trous sont plus petits ou davantage espacés.

On peut évidemment réaliser au moyen de l'invention des éléments plans de construction, mais aussi des éléments courbes (par exemple des éléments cylindriques ou coniques). Mais on doit remarquer que, si les rayons de courbure à assigner à cet élément sont relativement grands par rapport aux épaisseurs, il est possible, en raison de l'excellente qualité des liaisons mécaniques entre coeur et peau, de cambrer un élément primitivement plan.

On va maintenant donner, pour faciliter la compréhension de l'invention et mettre ses avantages en évidence, des exemples de réalisation qui seront décrits en référence aux dessins annexés dans lesquels:

— la figure 1 est une section transversale d'une portion d'élément de construction utilisé pour la réalisation de l'invention,

— la figure 2 est la vue de dessus correspondante,

— la figure 3 est une section transversale d'une portion d'élément de construction qui peut également être utilisé pour la réalisation de l'invention,

— la figure 4 est une vue de dessus d'une variante,

— la figure 5 est une vue de côté d'une portion d'un élément de construction conforme à l'invention et destiné à être assemblé avec un autre élément de construction,

— la figure 6 est la vue de dessus correspondante,

— la figure 7 est une vue de dessus d'un autre mode de réalisation de l'invention.

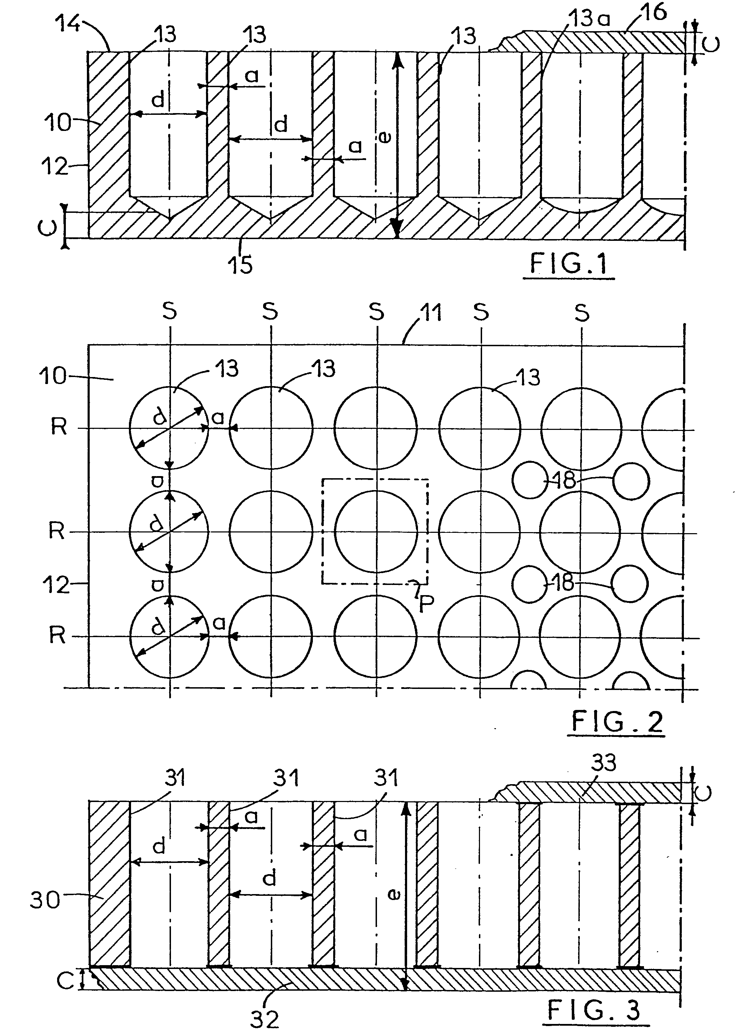

On considère simultanément les figures 1 et 2. L'élément de construction qu'elles représentent est constitué par un morceau 10 de tôle épaisse dont on voit deux bords 11 et 12 et dans lequel sont ménagés par la face 14 des trous borgnes 13 qui ont le même diamètre $\underline{d}$. Les centres de ces trous occupent les noeuds d'un réseau géométrique à mailles rectangulaires (avantageusement carrées). Ce ré-seau est donc déterminé par les intersections de deux pluralités orthogonales d'axes R et S. L'allègement obtenu par ces trous 13 est évidemment d'autant plus grand qu'ils sont plus gros, plus profonds et plus rapprochés. Plus précisément, l'allègement dépend des paramètres dimensionnels suivants:

d: diamètre des trous 13,

a: distance entre deux trous voisins d'une même rangée R ou S,

e: épaisseur totale de l'élément,

c: épaisseur moyenne de métal en fond de trou.

On verra plus loin que la meilleure façon de mettre en évidence les avantages de ce materiau consistera à comparer l'épaisseur totale $\underline{e}$ de l'élément avec l'épaisseur d'une tôle pleine de même masse et l'on utilisera les coefficients suivants:

— distance relative entre trous: $A = a/d$    (1)

— épaisseur relative de peau: $K = c/e$    (2) Il est intéressant de noter dès maintenant que les valeurs minimales de A et de K dépendent de l'épaisseur totale $\underline{e}$, de la technique de perçage mise en oeuvre et de la qualité du matériel de perçage (notamment en ce qui concerne le perçage mécanique).

Si les trous sont réalisés par perçage mécanique, on peut craindre, malgré les précautions d'usage (bon affûtage, refroidissement), une dégradation des caractéristiques des couches superficielles de métal constituant les parois des trous. Lorsque les sollicitations dynamiques appliquées à l'élément (fatigue) sont faibles devant les sollicitations statiques, on peut cependant observer que le perçage mécanique provoque, comme toute opération d'usinage mécanique, un écrouissage superficiel de ces couches ainsi que l'apparition de contraintes de compression, phénomènes qui auraient plutôt tendance à relever la limite élastique. Cependant, par mesure de précaution, on peut réaliser un réalésage ou encore un usinage complémentaire par un autre procédé, par exemple par un procédé d'attaque chimique ou d'abrasion par ultrasons. On peut alors obtenir des trous a fond plat ou bombé comme les deux derniers trous à droite 13a de la figure 1.

Avec des tôles épaisses (5mm ou davantage) et des trous d'un diamètre de plusieurs millimètres, on peut escompter obtenir pour A et pour K une valeur de 0,05. Pour des tôles plus minces (3 mm ou moins) et des trous d'un diamètre de l'ordre de 1 mm par exemple, on peut en tous cas obtenir pour A et K des valeurs de l'ordre de 0,2, ou même inférieures.

Ainsi qu'on l'a déjà indiqué, on peut réaliser un élément de construction à deux faces lisses en fixant sur la face 14, par laquelle débouchent les trous 13 (voir figure 1), une tôle mince 16. La liaison peut être réalisée par sondage, brasage ou collage etc... selon les conditions d'utilisation envisagées. Le paramètre $\underline{c}$ est alors égal à la somme de l'épaisseur moyenne en fond de trou et de l'épaisseur de la tôle 16, c'est-à-dire à la somme des épaisseurs de métal de part et d'autre des extrémités de chaque trou 13 devenu aveugle.

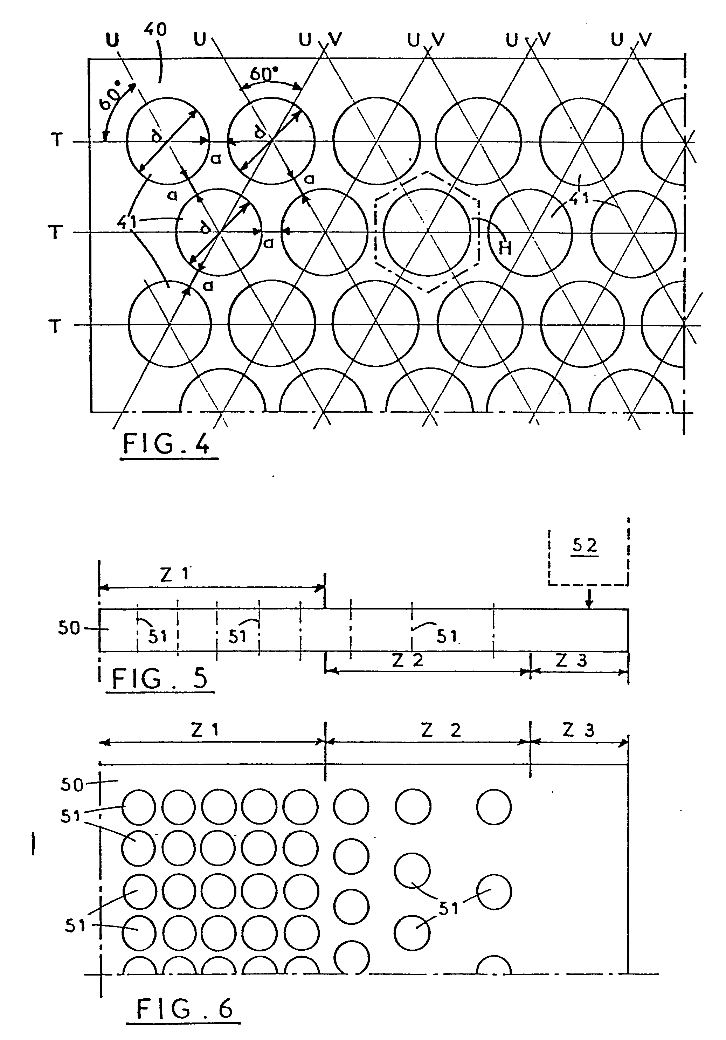

La figure 3 illustre une autre forme de réalisation d'un élément de construction. Le coeur de celui-ci est constitué par un morceau de tôle épaisse 30 que des trous 31 traversent de part en part. Après perçage, une tôle mince (peau) 32 est soudée, collée ou brasée sur l'une des faces de la tôle 30. Le paramètre $\underline{c}$ est l'épaisseur de la peau 32.

On peut là aussi recouvrir l'autre face d'une peau 33 soudée, brasée ou collée. Le paramètre $\underline{c}$ est alors égal à la somme des épaisseurs des peaux 32 et 33.

Pour alléger encore davantage l'élément de construction, qu'il soit réalisé conformément à la figure 1 ou à la figure 3, on peut envisager deux solutions. La première consiste à percer au centre de chaque maille du réseau de trous à mailles carrées (voir figure 2) un trou supplémentaire 18 de diamètre inférieur à l'épaisseur de métal:

$$(a^2 + d^2)^{1/2} - d$$

qui sépare deux trous dont les centres occupent deux sommets ou noeuds opposés de la maille, de telle sorte que ce trou 18 ne «morde» pas sur les parois des trous 13 qui l'entourent. Cette solution présente l'inconvénient de nécessiter une opération de perçage supplémentaire, inconvénient généralement faible si la machine est pourvue d'une commande numérique.

La deuxième solution consiste à disposer les trous selon un réseau plus compact que le réseau à mailles carrées. Elle est illustrée par la figure 4 dans laquelle les centres des trous 41 ménagés dans la tôle de coeur 40 dessinent un réseau à mailles triangulaires. Le centre de chaque trou est alors situé à l'intersection de trois axes tels que T, U et V. L'arrangement le plus compact (c'est-à-dire celui où, toutes choses égales par ailleurs, on peut loger le plus grand nombre de trous dans une surface donnée) est l'arrangement hexagonal régulier dans lequel les trois systèmes d'axes se coupent en formant des angles de 60°.

L'un des cas les plus intéressants d'utilisation d'un tel élément de construction est la réalisation d'enveloppes destinées à délimiter une veine de gaz chauds sous pression (par exemple d'enveloppes de canaux de post-combustion de turboréacteurs). Si l'on désire réaliser de telles enveloppes en tôle pleine les contraintes dues à la pression des gaz et aux efforts extérieurs (forces d'inertie et traînée de la tuyère par exemple) n'imposent qu'une épaisseur très faible mais la nécessité de prévoir un moment d'inertie suffisant pour éviter tout risque de flambage local conduit à des épaisseurs beaucoup plus grandes donc à des suppléments de masse importants. Quant aux éléments sandwichs du genre connu capables de supporter les contraintes dues aux pressions, leurs inerties sont généralement surabondantes et leurs épaisseurs gênantes. Ils sont en outre exposés à des contraintes différentielles d'origine thermique qui peuvent devenir dangereuses pour les motifs que l'on a déjà exposés.

Pour apprécier notamment l'accroissement d'épaisseur et par conséquent de rigidité que l'on peut conférer à une enveloppe du genre concerné par l'invention par rapport à une enveloppe de tôle pleine de même masse, on revient à la figure 2. L'élément qu'elle représente peut être considéré, du point de vue des masses et si l'on néglige les zones des bords, comme résultant de la juxtaposition de petits prismes élémentaires tels que P de section carrée avec des côtés de valeur égale à (a + d) et de hauteur égale à $\underline{e}$, prismes dans lesquels on a ménagé un trou circulaire de diamètre $\underline{d}$ et de profondeur égale à (e-c). On rappelle que $\underline{e}$ est l'épaisseur totale de l'élément et $\underline{c}$ l'épaisseur totale de peau (c'est-à-dire l'épaisseur de la tôle 32 ou l'épaisseur totale des peaux 32 et 33, selon les cas, dans la figure 3).

La masse $\underline{m}$ d'un tel prisme élémentaire est telle que ($\alpha$ signifiant «proportionnel à»):

$$m \; \alpha \; e \; (d + a)^2 - \pi \; d^2(e - c) \; / \; 4 \qquad (3)$$

La hauteur $\underline{e'}$ d'un prisme plein de même masse serait telle que:

$$m \; \alpha \; e' \cdot (d + a)^2 \qquad (4)$$

On peut déduire des relations (3) et (4), d'après (1) et (2):

$$1/E = e'/e = 1 - \pi \; (1\text{-}K) \; / \; 4 \; (1 + A)^2 \qquad (5)$$

relation dans laquelle E, que l'on appellera «facteur d'épaisseur», est le rapport de l'épaisseur totale de l'élément à l'épaisseur de la tôle pleine de même masse.

En admettant les valeurs A = 0,2 et K = 0,2 réalisables pratiquement même dans les cas les plus défavorables, on voit, d'après (4) que 1/E = 0,56 et que E = 1,77. Ainsi, un élément allégé d'épaisseur totale 2,5 mm consitué par un coeur perforé d'épaisseur 2 mm et par deux peaux de 0,25 mm chacune et dans lequel les trous ont un diamètre de 2,5 mm et un pas (distance entre axes) de 3 mm, ne pèse pas plus qu'une tôle pleine de 1,4 mm.

Si la disposition des trous est conforme à la figure 4, on voit que l'élément de construction peut être considéré comme constitué par la juxtaposition de petits prismes hexagonaux tels que H dont la hauteur est $\underline{e}$ et dont la largeur sur plat est (d + a). Un calcul du même genre que celui ayant conduit à la relation (5) donne:

$$1/E = e'/e = 1 - \pi \; (1\text{-}K) \; / \; 2 \; (1 + A)^2 \times \; 2\sqrt{3} \qquad (6)$$

Pour A = 0,2 et K = 0,2, 1/E = 0,5 et E = 2.

Ainsi, avec la disposition de trous de la figure 4, un élément de construction constitué par un coeur perforé d'épaisseur 2 mm avec deux peaux de 0,25 mm et dans lequel les trous ont un diamètre de 2,5 mm et un pas de 3 mm ne pèse pas plus qu'une tôle pleine de 1,25 mm.

Les figures 5 et 6 montrent une portion 50 d'un élément de construction selon l'invention dans lequel une réserve est prévue pour la fixation par soudage d'un élément rapporté tel qu'un bossage ou une bride 52. Dans ce dernier cas, la bride 5 peut être fixée sur l'élément, soit avant, soit après les opérations d'allègement par trous borgnes ou aveugles déscrites précédemment. L'absence de trous dans cette «réserve» se justifie par au moins deux raisons:

— permettre la diffusion correcte des efforts locaux apportés par la bride sans contrainte locale excessive dans la virole de canal par exemple,

— favoriser l'évacuation de la chaleur au cours du soudage,

— accessoirement, si l'élément rapporté est fixé sur la face par laquelle débouchent les trous, faciliter le soudage.

On distingue trois zones, à savoir:

— une zone Z1 dans laquelle la densité des trous 51 (c'est-à-dire leur nombre par unité de surface) est maximale,

— une zone Z3 exempte de trous pour constituer la réserve,

— une zone de transition Z2 située entre les zones Z1 et Z3 et dans laquelle la densité des trous 51 diminue de Z1 vers Z3 de telle sorte que l'on évite de créer dans l'élément une variation brutale des moments d'inertie.

Au lieu d'agir sur la densité des trous, on peut agir sur leur diamètre. Les trous de la zone de transition Z2 ont alors une densité constante, mais leur diamètre décroît au fur et à mesure qu'ils s'éloignent de Z1 pour se rapprocher de Z3.

En toute occurence, la face de la zone Z3 sur laquelle sera soudé l'élément rapporté n'est évidemment pas recouverte par une peau métallique rapportée.

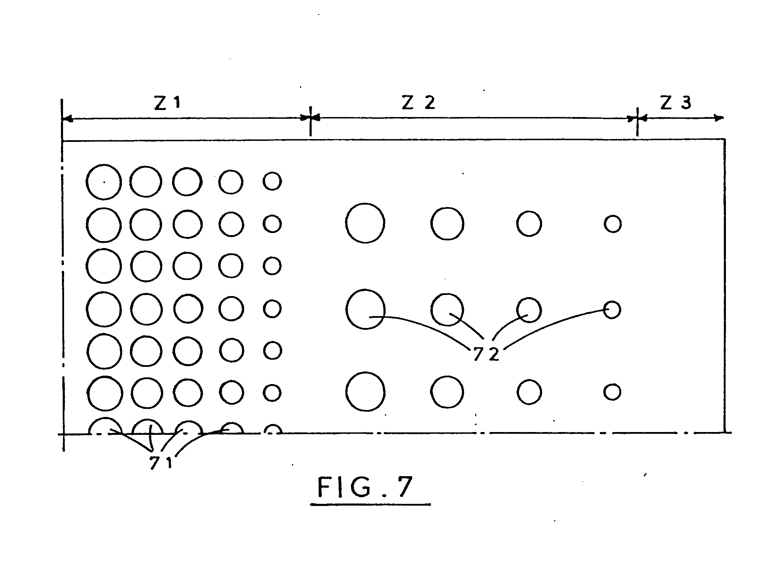

On peut évidemment employer dans la zone Z2, successivement l'un et l'autre moyen proposé ci-dessus pour la transition, le cas échéant à plusieurs reprises; par exemple en allant de Z1 vers Z3 (comme représenté figure 7):

— à pas égal, diminuer progressivement le diamètre des trous 71 sans changer leurs pas;

— éspacer les rangées dans les deux sens (par exemple en doublant leurs pas), le cas échéant en reprenant le diamètre initial (voire même un diamètre un peu plus grand)

— à ce pas augmenté, diminuer à nouveau progressivement le diamètre des trous 72.

Comme on l'a déjà indiqué, le perçage peut intervenir à divers stades de la réalisation de l'élément de construction si celui-ci n'est pas plan, par exemple s'il s'agit d'un manchon ou d'une virole. Si l'épaisseur n'est pas trop petite par rapport aux autres dimensions, le perçage de la tôle épaisse peut être réalisé après mise en forme et même après usinage. On peut de même, si l'épaisseur n'est pas trop petite, obtenir directement d'usinage les brides d'assemblage ou bossages avant perçage des trous d'allègement. S'il s'agit d'une virole de grand diamètre, dont le rayon est grand devant l'épaisseur, on peut réaliser le perçage avant le roulage ou le cambrage.

On terminera la présente description de l'invention en évoquant un avantage qui ne l'a pas été jusqu'ici. La réalisation de viroles de grand diamètre à partir de matériau sandwich du genre connu exige de nombreuses lignes de liaison en raison de la faible largeur des bandes de tôles minces disponibles dans le commerce. Ces liaisons peuvent se faire par exemple par des renforcements locaux, et des éclisses qui augmentent la masse de l'élément fini et sont relativement coûteux. Le coeur de l'élément de construction de l'invention au contraire est réalisé à partir de tôles épaisses disponibles en largeurs beaucoup plus grandes et les lignes de soudure sont donc beaucoup moins nombreuses (donc moins coûteuses de toute façon en prix et en masse du fait de leur nombre réduit). De plus, même pour ces lignes de soudure en nombre moins grand, les diminutions locales éventuelles de résistance et de rigidité correspondantes peuvent être compensées par un moyen analogue à celui employé pour les brides ou tout autre élément rapporté. A proximité des lignes de soudure sur le «coeur», les performations seront à un diamètre et/ou à une densité diminuée par rapport au reste de l'élément.

## Revendications

1. Élément étanche allégé de construction mécanique constitué par une tôle métallique dans la majeure partie de la surface de laquelle est ménagée une pluralité du trous d'allègement qui débouchent dans une seule face dudit élément et qui forment des rangées de trous, caractérisé en ce que ces trous d'allègement sont des trous cylindriques (13, 13a, 18; 31; 41; 71, 72) qui sont disposés dans chaque rangée de telle sorte que l'épaisseur minimale de métal ($\underline{a}$) qui sépare deux trous adjacents est sensiblement inférieure au diamètre ($\underline{d}$) d'au moins l'un d'entre eux et dont les profondeurs sont telles que l'épaisseur minimal de métal ($\underline{c}$) qui sépare le fond de chaque trou de la face opposée (15, 16; 32, 33) est au plus égale au diamètre de ce trou, et en ce que l'élément étanche allégé de construction mécanique comporte au moins une zone de reserve (Z3), qui est destinée à la fixation d'un autre élément (52) de construction et qui ne comporte pas de trous d'allègement, une zone (Z2) dite de transition étant prévue, adjacente à la zone de réserve (Z3), et comportant des trous d'allègement (72) de diamètres décroissants vers la zone de réserve (Z3).

2. Élément étanche allégé suivant la revendication 1, caractérisé par le fait qu'à l'exception des zones de transition (Z2) et des localisations d'efforts, les trous (13, 13a; 31; 41; 51) sont de même diamètre.

3. Élément étanche allégé selon l'une des revendications 1 ou 2, caractérisé en ce que l'épaisseur de métal ($\underline{a}$) qui sépare deux trous de même diamètre ($\underline{d}$) d'une même rangée est telle que $0,05 \leqslant a/d \leqslant 0,2$.

4. Élément étanche allégé selon l'une des revendications 1 à 3, caractérisé en ce que les centres des trous (13, 13a) sont disposés géométriquement aux noeuds d'un réseau à mailles rectangulaires ou carrées, formé par deux pluralités d'axes orthogonaux (R, 5).

5. Élément étanche allégé selon la revendication 4, caractérisé en ce qu'un trou supplémentaire d'allègement (18) est percé au centre de chaque maille.

6. Élément étanche allégé selon l'une quelconque des revendications 1 à 3, caractérisé en ce que les centres des trous (41) sont disposés géométriquement aux noeuds d'un réseau à mailles triangulaires formé par trois pluralités d'axes (T, U, V).

7. Élément étanche allégé selon la revendication 6, caractérisé en ce que les mailles sont équilatérales.

8. Élément étanche allégé selon l'une quelconque des revendications 1 à 7, caractérisé en ce que, à l'exception des zones de transition (Z2) et de réserve (Z3) il est constitué par la juxtaposition d'une première tôle (30) que les trous (31) traversent de part en part et d'une deuxième tôle (32) sensiblement plus mince que la première et qui est fixée sur l'une des faces de celle-ci par soudage, brasage ou collage.

9. Elément étanche allégé selon la revendication 8, caractérisé en ce que le rapport de l'épaisseur (c) de ladite deuxième tôle (32) à l'épaisseur totale (e) de l'élément est de 0,05 à 0,2.

10. Elément étanche allégé selon l'une quelconque des revendications 1 à 9 caractérisé en ce que à l'exception des zones de transition (Z2) et de réserve (Z3) il comporte en outre une tôle supplémentaire (16; 33) sensiblement plus mince que l'épaisseur de tôle (10; 30) traversée par les trous (13, 13a, 18; 31) et fixée par soudage, brasage ou collage sur la face dans laquelle débouchent lesdits trous.

11. Elément étanche allégé selon la revendication 10 caractérisé en ce que le rapport de l'épaisseur (c) de la tôle supplémentaire (16; 33) à l'épaisseur totale (e) de l'élément est de 0,05 à 0,2.

12. Elément étanche allégé selon l'une des revendications 1 à 11, caractérisé an ce qu'une zone (Z1), adjacente à la zone de transition (Z2) comporte une partie où les trous d'allègement (71) sont de diamètres décroissants, vers la zone de transition (Z2).

13. Elément étanche allégé selon l'une des revendications 1 à 12, caractérisé en ce que la zone de transition (Z2), adjacente à la zone de réserve (Z3), comporte des trous d'allègement (51; 72) plus espacés que ceux de l'autre zone.

14. pièce métallique consituée par l'assemblage d'au moins deux éléments de construction, caractérisé en ce que au moins l'un de ces éléments est conforme à l'une quelconque des revendications 1 à 13.

15. Enveloppe de canal de post-combustion de turboréacteur caractérisée en ce qu'elle est conforme à la revendication 14.


**Patentansprüche**

1. Undurchlässiges metallisches Leichtbauelement, bestehend aus einem Blech, dessen Oberfläche zum grösseren Teil mit einer Vielzahl von gewichtsmindernen Löchern versehen ist, die nach nur einer Seite des Elements geöffnet und in Form von Lochreihen angeordnet sind, dadurch gekennzeichnet, dass es sich bei den gewichtsmindernden Löchern um zylindrische Löcher (13, 13a, 18; 31; 41; 71, 72) handelt, die in den jeweiligen Reihen in der Weise angeordnet sind, dass die kleinste Metalldicke (a), die zwei nebeneinanderliegende Löcher voneinander trennt, deutlich kleiner ist als der Durchmesser (d) mindestens eines der beiden Löcher, welche so tief sind, dass die geringste Metalldicke (c), die den Boden jedes Loches von der Gegenseite (15, 16; 32, 33) trennt, höchstens gleich dem Durchmesser des betreffenden Loches ist, dass das undurchlässige Leichtbauelement mindestens einen Reservebereich (Z3) aufweist, der zur Befestigung eines weiteren Bauelements (S2) dient und der keine gewichtsmindernden Löcher aufweist, und dass neben dem Reservebereich (Z3) ein weiterer, als Übergangsbereich bezeichneter Bereich vorgesehen ist, der gewichtsmindernde Löcher (72) aufweist, deren Durchmesser in Richtung auf den Reservebereich (Z3) abnimmt.

2. Undurchlässiges Leichtbauelement nach Anspruch 1, dadurch gekennzeichnet, dass die Löcher (13, 13a; 31; 41; 51), ausser in dem Übergangsbereich (Z2) und in dem Beanspruchungsbereich, gleichen Durchmesser haben.

3. Undurchlässiges Leichtbauelement nach Anspruch 1 oder 2, dadurch gekennzeichnet, dass die Dicke (a) des Metalls, das zwei Löcher gleichen Durchmessers in derselben Reihe voneinander trennt, so gewählt ist, dass die Beziehung $0,05 \leq a/d \leq 0,2$ erfüllt ist.

4. Undurchlässiges Leichtbauelement nach einem der Ansprüche 1 bis 3, dadurch gekennzeichnet, dass die Mittel der Löcher (13, 13a) geometrisch auf den Knotenpunkten eines Netzes aus rechteckigen oder quadratischen Maschen liegen, das von zwei Gruppen von Orthogonalachsen (R, S) gebildet ist.

5. Undurchlässiges Leichtbauelement nach Anspruch 4, dadurch gekennzeichnet, dass in der Mitte jeder Masche ein zusätzliches gewichtsminderndes Loch (18) gebohrt ist.

6. Undurchlässiges Leichtbauelement nach einem der Ansprüche 1 bis 3, dadurch gekennzeichnet, dass die Mitten der Löcher (41) geometrisch in den Knotenpunkten eines Netzwerks aus Dreiecksmaschen liegen, die von drei Gruppen von Achsen (T, U, V) gebildet sind.

7. Undurchlässiges Leichtbauelement nach Anspruch 6, dadurch gekennzeichnet, dass die Maschen gleichseitig sind.

8. Undurchlässiges Leichtbauelement nach einem der Ansprüche 1 bis 7, dadurch gekennzeichnet, dass es mit Ausnahme des Übergangsbereichs (Z2) oder des Reservebereichs (Z3) gebildet ist durch Aneinanderlegen eines ersten Blechs (30), durch das die Löcher (31) vollständig hindurchführen, und eines deutlich dünneren zweiten Blechs (32), das mit der einen Seite des ersten Blechs verschweisst, verlötet oder verklebt ist.

9. Undurchlässiges Leichtbauelement nach Anspruch 8, dadurch gekennzeichnet, dass das Verhältnis der Dicke (c) des zweiten Blechs (32) zu der Gesamtdicke (e) des Elements zwischen 0,05 und 0,2 liegt.

10. Undurchlässiges Leichtbauelement nach einem der Ansprüche 1 bis 9, dadurch gekennzeichnet, dass es mit Ausnahme des Übergangsbereichs (Z2) und des Reservebereichs (Z3) ausserdem ein zusätzliches Blech (16; 33) aufweist, das deutlich dünner ist als das Blech (10; 30), durch das die Löcher (13, 13a; 18; 31) hindurchführen, und mit der Fläche, an der die Löcher ausmünden, verschweisst, verlötet oder verklebt ist.

11. Undurchlässiges Leichtbauelement nach Anspruch 10, dadurch gekennzeichnet, dass das Verhältnis der Dicke (c) des zusätzlichen Blechs (16; 33) zu der Gesamtdicke (e) des Elements zwischen 0,05 und 0,2 liegt.

12. Undurchlässiges Leichtbauelement nach einem der Ansprüche 1 bis 11, dadurch gekennzeichnet, dass ein an den Übergangsbereich (Z2) angrenzender Bereich (Z1) einen Teilbereich besitzt, in welchem der Durchmesser der gewichtsmindernden Löcher (71) in Richtung auf den Übergangsbereich abnimmt.

13. Undurchlässiges Leichtbauelement nach einem der Ansprüche 1 bis 12, dadurch gekennzeichnet, dass der Übergangsbereich (Z2) angrenzend an den Reservebereich (Z3) gewichtsmindernde Löcher (51; 72) aufweist, die grösseren Abstand voneinander haben als diejenigen des anderen Bereichs.

14. Metallteil, hergestellt durch Zusammenfügen von mindestens zwei Bauelementen, dadurch gekennzeichnet, dass mindestens das eine dieser Elemente einem der Ansprüche 1 bis 13 entspricht.

15. Umhüllung des Nachbrennkanals eines Turbotriebwerks, dadurch gekennzeichnet, dass sie dem Metallteil nach Anspruch 14 entspricht.

**Claims**

1. Impervious metallic, light-weight construction element, constituted by a metallic sheet in the major part of the surface of which is provided a plurality of lightening holes which open into a single face of the said element and which forms rows of holes, characterised in this that these lightening holes are cylindrical holes (13, 13a; 18; 31; 41; 71, 72) which are disposed in each row so that the minimum thickness of the metal ($a$) which separates two adjacent holes is substantially less than the diameter ($d$) of at least one in two and of which the depths are such that the minimum thickness of metal ($c$) which separates the base of each of the holes from the opposite face (15, 16; 32, 33) is at least equal to the diameter of that hole, and in this that the impervious light-weight mechanical construction comprises at least one reserve zone (Z3) which is intended for securing to another construction element (S2) and which does not have any lightening holes, a zone (Z2) termed the transition zone being provided, adjacent to the reserve zone (Z3), and comprising lightening holes (72) of decreasing diameter towards the reserve zone (Z3).

2. Impervious light-weight element according to claim 1, characterised by the fact that with the exception of the transition zones (Z2) and stress zones the holes (13, 13a; 31; 41; 51) are of the same diameter.

3. Impervious light-weight element according to claim 1 or claim 2, characterised in this that the thickness of metal ($a$) which separates two holes of the same diameter ($d$) of a common row is such that 0.05 ≤ a/d ≤ 0.2.

4. Impervious light-weight element according to one of claims 1 to 3, characterised in this that the centres of the holes (13, 13a) are geometrically disposed at the intersections of a rectangular or square grid of lines formed by two pluralities of orthogonal axes (R, S).

5. Impervious light-weight element according to claim 4, characterised in this that a supplementary lightening hole (18) is pierced at the centre of each grid area.

6. Impervious light-weight element according to any one of claims 1 to 3, characterised in this that the centres of the holes (41) are disposed geometrically at the intersections of a triangular grid formed by three pluralities of axes (T, U, V).

7. Impervious light-weight element according to claim 6, characterised in this that the grid areas are equilateral triangles.

8. Impervious light-weight element according to one of claims 1 to 7, characterised in this that with the exception of the transition zones (Z2) and reserve zones (Z3) it is constituted by the juxtaposition of a first sheet (30), that the holes (31) pass from one side to the other and that a second sheet (32) substantially thinner than the first and which is secured on one of the faces of the latter by welding, brazing of adhesive.

9. Impervious light-weight element according to claim 8, characterised in this that the ratio of the thickness ($c$) of the said second sheet (32) to the total thickness ($e$) of the element is from 0.05 to 0.2.

10. Impervious light-weight element according to one of the preceding claims 1 to 9, characterised in this that with the exception of the transition zone (Z2) and the reserve zone (Z3) it comprises in addition a supplementary sheet (16; 33) substantially thinner than the thickness of the sheet (10; 30) traversed by holes (13; 13a; 18; 31) and secured by welding, brazing of adhesive on the face at which the holes are open.

11. Impervious light-weight element according to claim 10, characterised in this that the ratio of the thickness ($c$) of the supplementary sheet (16; 33) to the total thickness ($e$) of the element is from 0.05 to 0.2.

12. Impervious light-weight element according to one of claims 1 to 11, characterised in this that one zone (Z1), adjacent to the transition zone (Z2) comprises a part where the lightening holes (71) are of decreasing diameter, towards the transition zone (Z2).

13. Impervious light-weight element according to one of claims 1 to 12, characterised in this that the transition zone (Z2), adjacent to the reserve zone (Z3) comprises lightening holes (51; 72) spaced further apart than those of the other zone.

14. Metallic part constituted by the assembly of at least two construction elements, characterised in this that at least one of the elements is in accordance with any one of claims 1 to 13.

15. Casing of a post-combustion duct of a turboreactor characterised in this that it is in accordance with claim 14.

FIG.1

FIG.2

FIG.3

FIG. 4

FIG. 5

FIG. 6

11

FIG.7